(19) Europäisches Patentamt
European Patent Office
Office européen des brevets

(11) EP 4 270 527 A1

(12) EUROPEAN PATENT APPLICATION
published in accordance with Art. 153(4) EPC

(43) Date of publication:
01.11.2023 Bulletin 2023/44

(51) International Patent Classification (IPC):
$H01M\ 4/131^{(2010.01)}$     $H01M\ 4/485^{(2010.01)}$

(21) Application number: 20967002.5

(22) Date of filing: 25.12.2020

(52) Cooperative Patent Classification (CPC):
H01M 4/131; H01M 4/36; H01M 4/485;
H01M 4/525; H01M 10/0525; H01M 2004/021;
H01M 2004/027; Y02E 60/10

(86) International application number:
PCT/JP2020/048780

(87) International publication number:
WO 2022/137516 (30.06.2022 Gazette 2022/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: KABUSHIKI KAISHA TOSHIBA
Minato-ku
Tokyo
105-0023 (JP)

(72) Inventors:
• HARA, Ryo
  Tokyo 105-0023 (JP)
• OTANI, Natsuki
  Tokyo 105-0023 (JP)
• SAITO, Takasumi
  Tokyo 105-0023 (JP)

(74) Representative: Hoffmann Eitle
Patent- und Rechtsanwälte PartmbB
Arabellastraße 30
81925 München (DE)

(54) ELECTRODE, BATTERY, AND BATTERY PACK

(57) According to one embodiment, provided is an electrode including an active material that includes a titanium-containing oxide. The active material has an average primary particle size of 200 nm or more and 600 nm or less. A specific surface area $S_A$ according to a nitrogen adsorption method and a pore specific surface area $S_B$ according to mercury porosimetry of the electrode satisfy a relationship of $0.3 \leq S_A/S_B < 0.6$.

F I G. 2

Processed by Luminess, 75001 PARIS (FR)

**Description**

FIELD

Embodiments described herein relate generally to an electrode, a battery, and a battery pack.

BACKGROUND

Application of lithium ion secondary batteries, in which charge and discharge are performed by movement of lithium ions between a positive electrode and a negative electrode, has been widely under progress from small-scale use such as portable electronic devices to large-scale use such as electric automobiles and electric power supply adjustment systems, taking advantage of their benefits in that high energy density and high output can be obtained.

A nonaqueous electrolyte battery using a spinel lithium titanate, with a high lithium insertion and extraction potential of about 1.55 V (vs. Li/Li$^+$) in terms of a lithium electrode, as the negative electrode active material, in place of a carbon material, has also been put to practical use. The spinel lithium titanate has excellent cycle performance because of its change in volume accompanying charge and discharge being little. Moreover, in a negative electrode including the spinel lithium titanate, precipitation of lithium metal does not precipitate upon lithium insertion and extraction, and thus, a secondary battery provided with this negative electrode is capable of being charged with a large current or at a low temperature. So as to further improve the large current performance and low temperature performance, diminishing of the particle size of spinel lithium titanate is being considered.

CITATION LIST

PATENT LITERATURE

[Patent Literature 1] Jpn. Pat. Appln. KOKAI Publication No. 2009-158396
[Patent Literature 2] Jpn. Pat. Appln. KOKAI Publication No. 2013-105704
[Patent Literature 3] Jpn. Pat. Appln. KOKAI Publication No. 2007-18882
[Patent Literature 4] WO 2018/110708
[Patent Literature 5] Jpn. Pat. Appln. KOKAI Publication No. 2018-156865
[Patent Literature 6] Jpn. Pat. Appln. KOKAI Publication No. 2014-143004
[Patent Document 7] Jpn. Pat. Appln. KOKAI Publication No. H9-161801

NON PATENT LITERATURE

[Non Patent Literature 1] "Handbook of Fine Particles" written by Genji Jimbo, et al, Asakura Shoten (1991), pp. 151 to 152
[Non Patent Literature 2] "Powder Property Measuring Method" edited by Sohachiro Hayakawa, Asakura Shoten (1973), pp. 257 to 259

SUMMARY

TECHNICAL PROBLEM

An object is to provide an electrode capable of realizing a battery excellent in large current performance and cycle life performance at a low temperature, with little gas generation, and high in energy density, and to provide a battery equipped with the electrode, and a battery pack equipped with the battery.

SOLUTION TO PROBLEM

According to one embodiment, provided is an electrode including an active material that includes a titanium-containing oxide. The active material has an average primary particle size of 200 nm or more and 600 nm or less. A specific surface area $S_A$ according to a nitrogen adsorption method and a pore specific surface area $S_B$ according to mercury porosimetry of the electrode satisfy a relationship of $0.3 \leq S_A/S_B < 0.6$.

According to another embodiment, provided is a battery including a positive electrode, a negative electrode, and an electrolyte. At least one of the positive electrode and the negative electrode includes the above electrode.
According to yet another embodiment, a battery pack is provided. The battery pack includes the above battery.

BRIEF DESCRIPTION OF THE DRAWINGS

FIG. 1 is a plan view schematically showing an example of an electrode according to an embodiment.
FIG. 2 is a graph showing a particle size distribution for the example of the electrode according to the embodiment.
FIG. 3 is a sectional view of an example of a battery according to the embodiment, cut in a thickness direction.
FIG. 4 is an enlarged sectional view of a section A of FIG. 3.
FIG. 5 is a partially cutaway perspective view of another example of the battery according to the embodiment.
FIG. 6 is an exploded perspective view of a battery pack of an example according to an embodiment.
FIG. 7 is a block diagram showing an electric circuit of the battery pack shown in FIG. 6.

DETAILED DESCRIPTION

Hereinafter, embodiments will be described with reference to the drawings. The same reference signs are applied to common components throughout the embodiments and overlapping explanations are omitted.
Each drawing is a schematic view for explaining the embodiment and promoting understanding thereof; though there may be differences in shape, size and ratio from those in an actual device, such specifics can be appropriately changed in design taking the following explanations and known technology into consideration.

(First Embodiment)

According to a first embodiment, an electrode is provided. The electrode includes an active material. The active material includes a titanium-containing oxide and has an average primary particle size of 200 nm or more and 600 nm or less. For the electrode, a specific surface area $S_A$ determined according to a nitrogen adsorption method and a pore specific surface area $S_B$ determined according to mercury porosimetry satisfy a relationship of $0.3 \leq S_A/S_B < 0.6$.
The electrode according to the embodiment may be a battery electrode. An example of the battery within which the electrode according to the embodiment may be included is a secondary battery such as a lithium secondary battery. The secondary battery includes nonaqueous electrolyte secondary batteries containing nonaqueous electrolyte(s). The electrode may be a negative electrode for a battery, for example.
A secondary battery provided with a negative electrode including a titanium-containing oxide is excellent in cycle life performance and is also capable of being used at a large current or charged under a low temperature condition. However, for a secondary battery provided with a negative electrode including a titanium-containing oxide, in a case where charge-discharge cycles are repeated at a high current or a low temperature, a decrease in reversible capacity occurs. As a result of diligent research to solve the issue concerning a nonaqueous electrolyte battery provided with a negative electrode including a titanium-containing oxide, the inventors have devised the electrode according to the first embodiment.
The electrode according to the first embodiment contains a titanium-containing oxide having an average primary particle size of 200 nm or more and 600 nm or less as an active material, in which a specific surface area $S_A$ measured by a nitrogen ($N_2$) adsorption method and a pore specific surface area $S_B$ measured by mercury porosimetry satisfy the relationship $0.3 \leq S_A/S_B < 0.6$. Since the electrode has such a configuration, even if the battery is subjected to repeated charge-discharge cycles at a high current or a low temperature, a decrease in capacity can be suppressed, and a battery having excellent life performance can be provided.
The mechanism by which the charge-discharge cycle performance of such an electrode is improved is not completely understood, but is considered to be as follows. Since the specific surface area is increased by reducing the primary particle size of the particles of the active material, the lithium ion acceptance of the active material itself at a large current or a low temperature is improved. However, as the primary particle size decreases, the volume among the pores in the electrode occupied by pores having a relatively small pore diameter increases. Since lithium ions have difficulty in diffusing in pores having a small pore diameter at a large current or a low temperature, the current distribution of the whole electrode becomes non-uniform. It is considered that a decrease in capacity is therefore likely to occur upon repeating the charge-discharge cycles. In addition, in pores having a small pore diameter, the overvoltage is great, and thus, gas generation is likely to occur due to side reactions. Moreover, in a material having a small primary particle size, high crystallinity is difficult to obtain. Therefore, even in an initial state, the capacity of the active material is reduced, and thus the energy density of the electrode may be reduced.

In the electrode, since the average primary particle size of the active material particles is 200 nm or more and 600 nm or less, good input performances can be exhibited even under a large current condition or a low temperature condition. To be specific, since the average primary particle size is 200 nm or more, the crystallinity of the active material can be made high, so that the charge-discharge cycle performances and energy densities of batteries using the electrode can be improved. Since the average primary particle size is 600 nm or less, batteries having excellent low-temperature input performance can be obtained.

The specific surface area $S_A$ of the electrode measured by the nitrogen adsorption method primarily reflects the specific surface area of relatively small pores having a pore diameter on a scale of about 0.1 nm to 100 nm among the pores within the electrode. In contrast, the pore specific surface area $S_B$ of the electrode measured by mercury porosimetry primarily reflects the specific surface area of relatively large pores having a pore diameter on a scale of about 1 nm to 1 mm among the pores within the electrode. That is, the ratio $S_A/S_B$ between the two is an index representing the proportion of the relatively small pores and the relatively large pores within the electrode. In such an electrode, since the relationship of $0.3 \leq S_A/S_B < 0.6$ is satisfied, in a battery using the electrode, cycle deterioration at a large current or a low temperature is suppressed, thereby improving life performance. Further, the electrode can realize a battery with low gas generation and high energy density. Specifically, since the ratio $S_A/S_B$ is 0.3 or higher, the proportion of large pores in the electrode does not become too large, so that the amount of the active material per volume contained in the electrode can be sufficiently increased, and thus an electrode exhibiting a high energy density can be obtained. If the ratio $S_A/S_B$ is less than 0.6, the proportion of small pores in the electrode is little, so that the non-uniform current distribution and gas generation described above can be suppressed.

In the particle size distribution of the electrode by a laser diffraction-scattering method, the ratio $D_{90}/D_{50}$ of the particle size $D_{90}$ at which the cumulative frequency from the small particle size side is 90% to the average particle size $D_{50}$ at which the cumulative frequency from the small particle size side is 50% is preferably 5 or more and 10 or less. In the electrode having such a particle size distribution, the state of the pore diameter and the pore specific surface area is likely to be in the range of the ratio $S_A/S_B$ described above. Therefore, the effect of improving the cycle life performance is more easily obtained.

For the titanium-containing oxide contained as active material, a half value width of a peak attributed to the (111) plane is desirably 0.15 or less in an XRD spectrum measured by a powder X-ray diffraction (XRD), described later. In the case where the half value width of the (111) peak is 0.15 or less, the crystallinity of the titanium-containing oxide particles is high, so the diffusibility of lithium ions in the particles is good, whereby the low-temperature input performance is enhanced, and thus, the generation of gas due to overvoltage is reduced. Alternatively, in a case where the crystallite diameter is large, as well, the half value width may be 0.15 or less. In particles having a large crystallite diameter, the number of grain boundaries within the particles is few, and so the diffusibility of lithium ions within the particles is improved, whereby the low-temperature input performance is enhanced, and thus, the generation of gas due to overvoltage is reduced. Here, the (111) plane refers to a crystal lattice plane represented by a Miller index.

Next, the electrode according to the first embodiment will be described in more detail.

The electrode may include a current collector and an active material-containing layer (electrode mixture layer). The active material-containing layer may be formed, for example, on one side or both of reverse sides of the current collector having a strip shape. The active material-containing layer includes an active material, and may optionally include an electro-conductive agent and a binder.

The active material contains a titanium-containing oxide having an average primary particle size of 200 nm or more and 600 nm or less. The titanium-containing oxide preferably includes a lithium-titanium composite oxide. An electrode containing the titanium-containing oxide such as the lithium-titanium composite oxide can exhibit a Li insertion potential of 0.4 V (vs. Li/Li$^+$) or more in terms of a value with respect to the oxidation-reduction potential of lithium, and thus can prevent precipitation of metallic lithium on the surface of the electrode upon repeated input and output at a large current. It is particularly preferable for the titanium-containing oxide to include a lithium-titanium composite oxide having a spinel crystal structure. Specific examples of the spinel lithium-titanium composite oxide include spinel-structured lithium titanate represented by $Li_{4+a}Ti_5O_{12}$, in which the value of the subscript a varies with charge and discharge in the range of $0 \leq a \leq 3$.

The active material may include primary particles and secondary particles of the titanium-containing oxide. The primary particles of the titanium-containing oxide have the average primary particle size described above. The secondary particles of the titanium-containing oxide include plural primary particles having the average primary particle size described above.

The average particle size of the secondary particles (average secondary particle size) is preferably 1 $\mu$m or more and 100 $\mu$m or less. If the average particle size of the secondary particles is within this range, the secondary particles can be handled easily in industrial production, and the mass and thickness of a coating film for producing an electrode can be made uniform. Further, decrease in surface smoothness of the electrode can be prevented. The average particle size of the secondary particles is more preferably 2 $\mu$m or more and 30 $\mu$m or less.

The specific surface area of the secondary particles measured by a BET method is preferably 3 m$^2$/g or more

and 50 m$^2$/g or less. If the specific surface area is 3 m$^2$/g or more, it is possible to sufficiently secure the insertion and extraction sites for lithium ions. If the specific surface area is 50 m$^2$/g or less, handling in industrial production is easy. More preferably, the secondary particles have a specific surface area of 5 m$^2$/g or more and 50 m$^2$/g or less as measured by the BET method. A method for measuring the specific surface area by the BET method will be described later.

The active material may further contain an active material other than the titanium-containing oxide. Here, the active material containing the titanium-containing oxide described above may be referred to as a "first active material" , and other additional active material(s) may be referred to as "second active material" for convenience. In the case where the second active material is further included in addition to the first active material, as the second active material, an active material capable of exhibiting a Li insertion potential of 0.4 V (vs. Li/Li$^+$) or higher is desirably used. In the case where the second active material is included, the mass proportion of the second active material to the first active material is preferably 5 mass% or more and 40 mass% or less, more preferably 10 mass% or more and 30 mass% or less.

The electro-conductive agent can have a function of improving the current collection performance and suppressing the contact resistance between the active material and the current collector. Examples of the electro-conductive agent include carbonaceous materials such as acetylene black, carbon black, graphite, a carbon nanofiber, and a carbon nanotube. These carbonaceous materials may be used alone, or plural carbonaceous materials may be used.

The binder can have a function of binding the active materials, the electro-conductive agents, and the current collector. Examples of the binder include polytetrafluoroethylene (PTFE), polyvinylidene fluoride (PVdF), fluororubber, styrene-butadiene rubber, an acrylic resin and a copolymer thereof, polyacrylic acid, and polyacrylonitrile.

With regard to the blending ratios of the active material, electro-conductive agent, and binder, the respective ratios are preferably within the ranges of 70% by mass or more and 96% by mass or less for the negative electrode active material, 2% by mass or more and 28% by mass or less for the conductive agent, and 2% by mass or more and 28% by mass or less for the binder. With the amount of the electro-conductive agent being 2% by mass or more, the current collecting performance of the active material-containing layer can be improved, whereby excellent large current performance and low temperature performance can be expected. With the amount of the binder being 2% by mass or more, binding properties between the active material-containing layer and the current collector are sufficient, whereby excellent cycle performance can be expected.

From the viewpoint of achieving higher capacities, on the other hand, the electro-conductive agent and the binder are each preferably 28% by mass or less.

The thickness of the active material-containing layer is preferably 20 μm or more and 80 μm or less. In a case where the active material-containing layer is provided on both the front and back principal surfaces of the current collector, the thickness herein refers to the thickness per one face. With the thickness of the active material-containing layer being 20 μm or more, in the battery, the proportion of the active material-containing layer relative to auxiliary members other than the active material-containing layer, such as a current collector and a separator in the battery, is increased, and therefore, the energy density of the battery can be increased. With the thickness being 80 μm or less, the distance over which lithium ions diffuse within the active material-containing layer is shortened, and the influence due to the resistance of the electrolyte is reduced, so that the current distribution in the electrode becomes more uniform. With a thicker active material-containing layer thickness, the diffusion of lithium ions in the active material-containing layer tends to be more rate-determining than the diffusion of lithium ions within the active material particles in the final stage of charging, whereby the influence of the resistance of the electrolyte tends to be apparent.

The current collector is preferably made of aluminum foil or aluminum alloy foil containing elements such as Mg, Ti, Zn, Mn, Fe, Cu, and Si. The thickness of the current collector is preferably 20 μm or less, and more preferably 15 μm or less.

Next, a specific example of the electrode according to the first embodiment will be described with reference to the drawings.

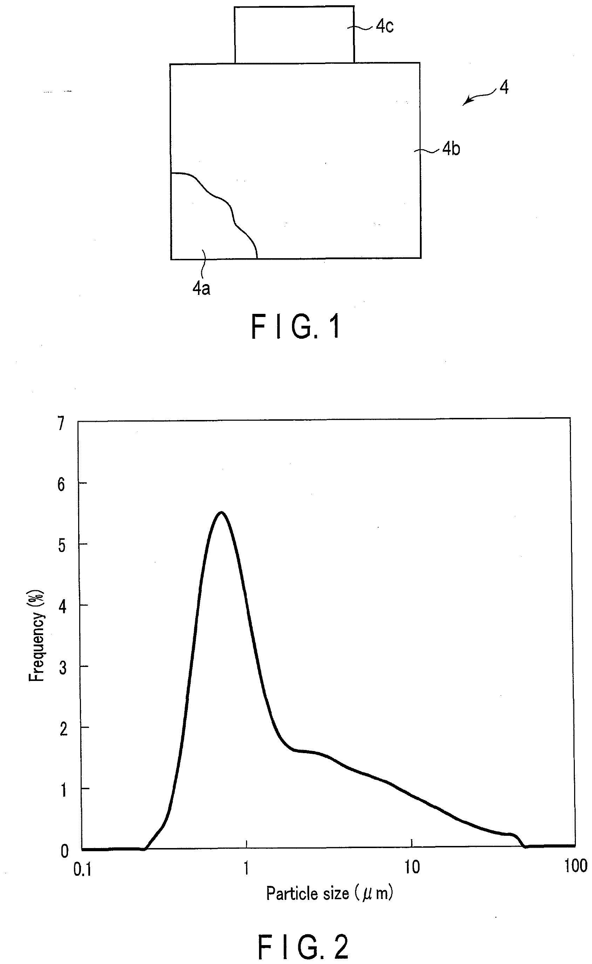

FIG. 1 is a partially cutaway plan view schematically showing an example of the electrode according to the embodiment. Here, an example of a negative electrode is illustrated as an example of the electrode.

A negative electrode 4 shown in FIG. 1 includes a negative electrode current collector 4a and a negative electrode active material-containing layer 4b provided on a surface of the negative electrode current collector 4a. The negative electrode active material-containing layer 4b is supported on the principal surface of the negative electrode current collector 4a.

The negative electrode current collector 4a includes a portion on which the negative electrode active material-containing layer 4b is not provided. This portion serves as, for example, a negative electrode current-collecting tab 4c. In the illustrated example, the negative electrode current-collecting tab 4c is a narrow portion that is narrower than the negative electrode active material-containing layer 4b. The negative electrode current-collecting tab 4c may be narrower than the negative electrode active material-containing layer 4b in such a manner, or may be equal in width to the negative electrode active material-containing layer 4b. Instead of the negative electrode current-collecting tab 4c which is a part of the negative electrode current collector 4a, a separate electrically conductive member may be electrically connected to the negative electrode 4 and may be used as an electrode current-collecting tab (negative electrode current-collecting tab).

[Production of Electrode]

The electrode can be produced in the following manner.

First, an active material containing a titanium-containing oxide is prepared. The titanium-containing oxide can be synthesized by, for example, a solid phase method. The titanium-containing oxide can also be synthesized by a wet synthesis method such as a sol-gel method or a hydrothermal method.

First, for example, a Ti source and a Li source are prepared in accordance with a target composition. These materials may be, for example, compounds such as oxides or salts. As the Li source, lithium hydroxide, lithium oxide, lithium carbonate, or the like can be used.

Next, the prepared materials are mixed in an appropriate stoichiometric ratio to obtain a mixture. For example, in a case where spinel lithium-titanium composite oxide represented by the composition formula $Li_4Ti_5O_{12}$ is synthesized, titanium-oxide $TiO_2$ and lithium-carbonate $Li_2CO_3$ can be mixed so that the molar ratio of Li:Ti in the mixture is 4:5.

When mixing the materials, the materials are preferably sufficiently pulverized then mixed. By mixing the sufficiently pulverized materials, the materials easily react with each other, and the generation of impurities can be suppressed when synthesizing the titanium-containing oxide. More than a predetermined amount of Li may be mixed. In particular, since Li may be lost during heat treatment, More Li may be added than a predetermined amount.

In the case of a wet method, the materials are dissolved in pure water, and the obtained solution is dried while stirring to obtain a firing precursor. Examples of the drying method include spray drying, granulation drying, freeze drying, or a combination thereof.

Next, the mixture or the firing precursor obtained by the previous mixing is subjected to a heat treatment at a temperature of 750°C or more and 1000°C or less for 30 minutes or more and 24 hours or less. With a temperature of 750°C or less, sufficient crystallization is difficult to obtain. On the other hand, with a temperature of 1000°C or more, grain growth proceeds too much, forming coarse particles, and therefore not preferable. Similarly, with a heat treatment time shorter than 30 minutes, sufficient crystallization is difficult to obtain. On the other hand, with a heat treatment time longer than 24 hours, grain growth proceeds too much, forming coarse particles, and therefore not preferable. The firing may be performed in the air. Alternatively, the firing may be performed in an oxygen atmosphere, a nitrogen atmosphere, or an argon atmosphere.

The heat treatment of the mixture is preferably performed at a temperature of 800°C or more and 950°C or less for one hour or more and five hours or less. The titanium-containing oxide can be obtained by such a heat treatment. Further, pre-firing may be performed before the main firing. The pre-firing is performed at a temperature of 450°C or more and 700°C or less for five hours or more and 24 hours or less.

The sample obtained by the main sintering may be subjected to a pulverization treatment to obtain primary particles in which agglomerates (secondary particles) are broken apart. As the pulverization method, for example, a mortar, a ball mill, a sand mill, a vibration ball mill, a planetary ball mill, a bead mill, a jet mill, a counter jet mill, a spiral jet mill, or the like can be used. The pulverization may be carried out by wet pulverization in the presence of a liquid pulverization agent such as water, ethanol, ethylene glycol, benzene, or hexane. The pulverization agent is effective in improving the pulverization efficiency and increasing the amount of fine powder produced. A more preferable method is a ball mill using zirconia balls as media, and wet pulverization with a liquid pulverization agent added is preferable. Further, an organic matter such as polyol for improving the pulverization efficiency may be added as a pulverization agent. Though the species of polyol is not particularly limited, pentaerythritol, triethylolethane, trimethylolpropane, and the like may be used alone or in combination.

Further, re-firing may be performed after the pulverization treatment. The average crystallite diameter of the titanium-containing oxide particles can be controlled by adjusting the firing conditions. The re-firing may be performed in the air, or may be performed in an oxygen atmosphere, an inert atmosphere using nitrogen, argon, or the like. The re-firing may be performed at a temperature of 250°C or more and 900°C or less for about 1 minute or more and 10 hours or less. If the temperature is 900°C or more, firing of the pulverized powder proceeds, and pores in the electrode are closed up due to sintering between powder particles even with heat treatment for a short time, and thus, the aforementioned relationship of pore diameters is difficult to obtain. If the temperature is less than 250°C, impurities (organic matter) attached at the time of wet pulverization cannot be gotten rid of, resulting in deterioration of the battery performance. Preferably, the re-firing is performed at a temperature of 400°C or more and 700°C or less for ten minutes or more and three hours or less. Further, washing with an aqueous solvent before re-firing is preferable.

In order to obtain secondary particles, a method using a spray dryer or the like may be used. In order to obtain primary particles or secondary particles having a certain particle size, classification may be performed as necessary.

Next, an electrode slurry is prepared using the active material containing the titanium-containing oxide prepared as described above. In the case where the second active material other than the titanium-containing oxide is further used, the electrode slurry is prepared using the second active material together with the active material (first active material) containing the titanium-containing oxide. Specifically, the active material(s), electro-conductive agent, and binder are suspended in a solvent to prepare a slurry. As the solvent (dispersion medium), for example, N-methylpyrrolidone (NMP) can be used.

The state of the pores and the particle size distribution within the electrode can be controlled by adjusting the content ratio and particle size of each of the members (active material, electro-conductive agent, and binder) contained in the electrode and the content ratio of the primary particles and the secondary particles of the active material. The particle size distribution reflects not only the primary particles and the secondary particles of the active material but also the content ratio of the electro-conductive agent and the presence or absence of agglomerates of the active material and the electro-conductive agent. That is, the state of the pores and the particle size distribution of the obtained electrode depend on the content ratio of each of the members in the electrode slurry, and the state and content ratio of the primary particles and the secondary particles of the active material. For example, with the primary particle diameter of the contained particles being smaller, the number of pores having a relatively small pore diameter tends to increase, and the value of the ratio $S_A/S_B$ of the pore specific surface areas tends to be larger. However, as the proportion of the secondary particles with respect to the primary particles increases, the value of the ratio $S_A/S_B$ tends to be smaller. That is, even if the average primary particle size is relatively small, an increase in the number of pores having a small pore diameter can be suppressed by appropriately controlling the content ratio between the primary particles and the secondary particles.

In the preparation of the slurry, when the active material, the electro-conductive agent and the binder are suspended in the solvent, a planetary centrifugal mixer, a planetary mixer, a jet paster, a homogenizer or the like is preferably used from the viewpoint of uniform mixing while preventing breakage of the secondary particles. The solid concentration of the slurry is preferably 40 wt% or more and 70 wt% or less. For the addition of the electro-conductive agent, a paste in which the electro-conductive agent is dispersed in advance in a solvent with a dispersing agent added may be used. By using such a paste, the kneading time can be shortened, and breaking apart of the secondary particles can be suppressed.

The particle size distribution obtained by the measurement of the slurry by the laser diffraction-scattering method coincides with the particle size distribution obtained for the obtained electrode. Therefore, by measuring the particle size distribution in the slurry by the laser diffraction-scattering method, examination can be made in advance as to whether or not the ratio $D_{90}/D_{50}$ of the particle size $D_{90}$ to the particle size $D_{50}$ is 5 or more and 10 or less. This makes it possible to more reliably produce an electrode having a pore specific surface area ratio $S_A/S_B$ in the range of $0.3 \leq S_A/S_B < 0.6$.

The slurry prepared as described above is applied onto one surface or both surfaces of the current collector, and then the coating film is dried. In this way, an electrode mixture layer (active material-containing layer) can be formed. Thereafter, the electrode mixture layer is pressed. As such, the electrode according to the first embodiment can be obtained.

<Measurement of Electrode>

Various measurement methods for the electrode will be described. Specifically, a method of confirming that the titanium-containing oxide is contained in the electrode, a method of measuring the average primary particle size of the particles of the titanium-containing oxide, a method of measuring the pore specific surface area $S_A$ by the nitrogen adsorption method, a method of measuring the pore specific surface area $S_B$ by mercury porosimetry, a method of measuring the particle size distribution, and a method of measuring the thickness of the active material-containing layer will be described.

In the case where the electrode to be measured is incorporated in a battery, the electrode as a measurement sample is taken out from the battery as follows. The battery is discharged and disassembled in an argon atmosphere glove box, and the electrode is taken out. The electrode is washed with diethyl carbonate, then dried under vacuum. Thus, a measurement sample is obtained.

[Confirmation of Titanium-Containing Oxide]

The active material contained in the electrode can be identified as described below, so as to confirm the presence or absence of the titanium-containing oxide.

After the electrode taken out from the battery is washed and dried as described above, the obtained electrode is attached to a glass sample plate. At this time, care should be taken to keep the electrode from peeling off or lifting by using a double-sided tape or the like. If necessary, the electrode may be cut to an appropriate size for attaching onto the glass sample plate. Further, a Si standard sample for correcting the peak position may be added onto the electrode.

Next, the glass plate onto which the electrode is attached is set in a powder X-Ray diffraction (XRD) apparatus, and a diffraction pattern is obtained using Cu-K$\alpha$ rays. An X-ray diffraction pattern can be obtained by using a Cu-Ku ray as a radiation source and performing measurement while varying 2θ in a measurement range of 5° to 90°.

As an apparatus for powder X ray diffraction measurement, for example, SmartLab available from Rigaku is used. The measurement conditions are as follows:

X ray source: Cu target
Output: 45 kV, 200 mA
Soller slit: 5° for both incident light and received light
step width: 0.02 deg
scan rate: 20 deg/min
semiconductor detector: D/teX Ultra 250
sample plate holder: a flat plate glass sample plate holder (thickness of 0.5 mm)
measurement range: range within $5° \leq 2θ \leq 90°$

When another apparatus is used, in order to obtain measurement results equivalent to those described above, measurement using a standard Si powder for powder X-ray diffraction is performed, so as to find conditions at which peak intensities and peak top positions equivalent to results obtained using the above apparatus match the above apparatus, and measurement of the sample is performed at those conditions.

If the spinel lithium titanium composite oxide is included in the active material as the measurement target, through the X-ray diffraction measurement, obtaining of an X-ray diffraction pattern attributed to a space group Fd-3m would be confirmed. A peak present within a range where 2θ is 17° to 19° in the X-ray diffraction pattern can be attributed to the (111) plane.

Subsequently, the sample containing the active material is observed with a scanning electron microscope (SEM) . The SEM observation is also desirably performed in an inert atmosphere of argon or nitrogen, avoiding the sample from coming into contact with air.

Using a SEM observation image at 3000 times magnification, several particles having the forms of primary or secondary particles examined within the field of view are selected. Whereupon, the particles are selected such that the particle size distribution of the selected particles is spread widely as possible. The species of the constituent elements and composition of the active material are specified by energy dispersive X-ray spectroscopy (EDX) for the observed active material particles. Accordingly, the species and amounts of elements other than Li among the elements contained in the selected particles can be specified. Similar operations are performed for each of the plural active material particles, thereby judging the state of mixing of the active material particles.

Subsequently, the active material containing layer is separated from the current collector using a spatula or the like, for example, to thereby obtain a powdery electrode mixture sample . The collected powdery sample is washed with acetone and dried. The obtained powder is dissolved with hydrochloric acid, and after removing the electro-conductive agent by filtration, diluted with ion exchange water to prepare the measurement sample. The ratio of contained metal within the measurement sample is calculated by inductively coupled plasma atomic emission spectroscopy (ICP-AES).

If plural species of active materials are present, their mass ratio is estimated from the content ratio of elements unique to each active material. The ratio between the unique elements and mass of active material is judged from the composition of the constituent elements determined by energy dispersive X ray spectroscopy.

As such, the active material (s) included in the electrode can be identified.

[Measurement of Average Primary Particle Size of Active Material]

After the electrode taken out from the battery is washed and dried as described above, for example, a spatula or the like is used to separate the active material-containing layer from the current collector, to obtain a powdery electrode mixture sample including the active material.

Next, the powdery sample is analyzed using the X-ray diffraction measurement and the SEM-EDX described above to examine the presence of the active material particles to be measured.

The magnification of the SEM observation is desirably about 5,000 times. When the particle morphology is difficult to determine due to additives such as an electro-conductive agent, an SEM equipped with a focused ion beam (FIB) (FIB-SEM), for example, is used to obtain an image of an electrode cross-section (e.g., a cross-section of the active-material-containing layer), and the obtained image is observed. The magnification is adjusted so that an image including 50 or more particles is obtained.

Then, the particle sizes of all the particles included in the obtained image are measured. With regard to the particles in the form of a secondary particle, the particle size is measured for each of the primary particles included in the secondary particle. If a particle has a spherical shape, the diameter thereof is determined to be the particle size. If a particle has a non-spherical shape, first, the length of the smallest span of the particle and the length of the largest span of the same particle are measured. The average value of these lengths is determined as the average primary particle size.

[Measurement of Pore Specific Surface Area by Nitrogen Adsorption Method]

The pore specific surface area $S_A$ of the electrode measured by the nitrogen adsorption method corresponds to the BET specific surface area of the electrode. The BET specific surface area is a specific surface area determined by the BET method, and is calculated by the nitrogen adsorption method. The analysis is carried out, for example, in the following manner.

The electrode obtained by washing and drying after being taken out from the battery as described above is cut according to the size of a measurement cell and used as a measurement sample . As the measurement cell, for example, a 1/2-inch glass cell is used. As a pretreatment method, the measurement cell is subjected to a degassing treatment by drying under reduced pressure at a temperature of about 100°C or higher for 15 hours. As a measuring apparatus, for example, Quantasorb QS-20 manufactured by Quantachrome Corporation is used.

A cut electrode as the measurement sample is placed in the measurement cell, and a mixed gas of 30% nitrogen and a balance of helium is flowed in. While the gas is flowing, the glass cell is immersed in liquid nitrogen to adsorb nitrogen in the mixed gas onto the sample surface. When the adsorption is completed, the glass cell is returned to ambient temperature, so that the adsorbed nitrogen is desorbed. Then, since the nitrogen concentration of the mixed gas increases, the amount of increase is quantified. The surface area ($m^2$) of the sample is calculated from the nitrogen content and the cross-sectional areas of the nitrogen molecules. The surface area is divided by the sample amount (g) to calculate the specific surface area (pore specific surface area $S_A$; numerical unit: $m^2/g$).

[Measurement of Pore Specific Surface Area by Mercury Porosimetry]

A method for measuring the pore specific surface area $S_B$ of the electrode by the mercury porosimetry will be described below.

As a measuring apparatus, Autopore 9520, a pore distribution measuring apparatus manufactured by Shimadzu Corporation or an apparatus having a function equivalent thereto can be used. The electrode washed and dried is cut into strips of about 12.5 mm $\times$ 25 mm, and the strips are used as sample pieces.

16 sample pieces are sampled into a standard large-sized cell, and measured at conditions of an initial pressure of 20 kPa (about 3 psia, corresponds to a pore diameter of about 60 $\mu$m), and a final pressure 414000 kPa (about 60000 psia, corresponds to a pore diameter of about 0.003 $\mu$m). The pore specific surface area (pore specific surface area $S_B$; numerical unit: $m^2/g$) is calculated assuming that the shape of the pores is cylindrical.

The analysis principle of mercury porosimetry is based on the following Washburn's equation (1).

$$D = -4\gamma\cos\theta/P \qquad\qquad (1)$$

Here, D is a pore diameter, $\gamma$ is a surface tension of mercury (480 dyne·cm$^{-1}$), $\theta$ is the angle of contact between mercury and the pore wall surface (140°), and P is applied pressure. Since $\gamma$ and $\theta$ are constants, the relationship between the applied pressure P and the pore diameter D is obtained from Washburn' s equation (1), and by measuring a mercury intrusion volume at that time, the pore diameter and its volume distribution can be derived. For details of the measurement method, principle, and the like, Non-Patent Literature 1, Non-Patent Literature 2, and the like can be referred to.

[Measurement of Particle Size Distribution]

The particle size distribution of the electrode can be measured by a laser diffraction-scattering method described below.

The electrode taken out from the battery is washed and dried, and then the active material-containing layer is separated from the current collector using, for example, a spatula and the like to obtain a powdery electrode mixture sample containing the active material. Next, the powdery sample is put into the measurement cell filled with N-methylpyrrolidone (NMP) until a measurable concentration is obtained. The capacity of the measurement cell and the measurable concentration vary depending on the particle size distribution measuring apparatus.

The measurement cell containing NMP and the electrode mixture sample dissolved therein is irradiated with ultrasonic waves for five minutes. The output of the ultrasonic waves is set, for example, in the range of 35 W to 45 W. For example, if NMP as the solvent is used in an amount of about 50 ml, the solvent mixed with the measurement sample is irradiated with ultrasonic waves having an output of about 40 W for 300 seconds. According to such ultrasonic irradiation, the

electro-conductive agent particles and the active material particles can be uniformly dispersed in the solvent.

The measurement cell is inserted into a particle size distribution measuring apparatus using a laser diffraction-scattering method, and the particle size distribution is measured. Examples of the particle size distribution measuring apparatus include Microtrac 3100 and Microtrac 3000II.

Thus, the particle size distribution of the electrode can be obtained.

An example of the particle size distribution of the electrode measured by the laser diffraction-scattering method is shown as a graph in FIG. 2. The graph corresponds to a histogram representing the particle size distribution of the particles included in the electrode.

[Measurement of Thickness of Active Material-Containing Layer]

The thickness of the active material-containing layer can be measured by SEM observation. After the electrode taken out from the battery is washed and dried as described above, the thickness of the active material-containing layer excluding the current collector is measured by SEM.

The electrode according to the first embodiment includes an active material having an average primary particle size of 200 nm or more and 600 nm or less. The active material contains a titanium-containing oxide. The specific surface area $S_A$ of the electrode obtained by the nitrogen adsorption method and the pore specific surface area $S_B$ of the electrode obtained by mercury porosimetry satisfy the relationship of $0.3 \leq S_A/S_B < 0.6$. The electrode can realize a battery with excellent large current performance and cycle life performance at a low temperature, little gas generation, and high energy density,

(Second Embodiment)

According to a second embodiment, a battery is provided. The battery includes a positive electrode, a negative electrode, and an electrolyte. At least one of the positive electrode and the negative electrode includes the electrode according to the first embodiment.

The battery may further include a separator disposed between the positive electrode and the negative electrode. The positive electrode, the negative electrode, and the separator may configure an electrode group. The electrolyte may be held in the electrode group.

In addition, the battery may further include a container member that contains the electrode group and the electrolyte.

The battery may further include a positive electrode terminal electrically connected to the positive electrode and a negative electrode terminal electrically connected to the negative electrode. At least a part of the positive electrode terminal and at least a part of the negative electrode terminal may extend outside the container member.

Such a battery may be, for example, a lithium ion secondary battery. The battery includes, for example, a nonaqueous electrolyte battery including a nonaqueous electrolyte as an electrolyte.

Hereinafter, the negative electrode, the positive electrode, the electrolyte, the separator, the container member, the positive electrode terminal, and the negative electrode terminal will be described in detail.

(1) Negative Electrode

The negative electrode includes a negative electrode current collector and a negative electrode active material-containing layer (negative electrode mixture layer) supported on one surface or both front and back surfaces of the negative electrode current collector and containing a negative electrode active material, an electro-conductive agent, and a binder.

The negative electrode may be the electrode according to the first embodiment. In the aspect as the negative electrode, the negative electrode current collector, the negative electrode active material, and the negative electrode active material-containing layer of the negative electrode respectively correspond to the current collector, the active material, and the active material-containing layer of the electrode according to the first embodiment. Since the electrode according to the first embodiment has been described in detail above, the description of the negative electrode is omitted here.

(2) Positive Electrode

The positive electrode includes a positive electrode current collector and a positive electrode active material-containing layer (positive electrode mixture layer) supported on one surface or both front and back surfaces of the positive electrode current collector and containing a positive electrode active material, an electro-conductive agent, and a binder.

The battery according to the second embodiment may include the electrode according to the first embodiment as a positive electrode. Alternatively, the battery may include a positive electrode having a configuration different from that of the electrode according to the first embodiment. Hereinafter, a positive electrode in an aspect different from the electrode according to the first embodiment will be described.

Examples of the positive electrode active material include lithium-containing nickel cobalt manganese oxides (for example, a compound represented by $Li_wNi_xCo_yMn_zO_2$, where $0 < w \leq 1$ and $x + y + z = 1$; or a compound represented by $Li_{1-s}Ni_{1-t-u-v}Co_tMn_uM1_vO_2$, where M1 is one or more selected from the group consisting of Mg, Al, Si, Ti, Zn, Zr, Ca, and Sn, and $-0.2 < s < 0.5$, $0 < t < 0.5$, $0 < u < 0.5$, $0 \leq v < 0.1$, and $t + u + v < 1$). Otherwise, the positive electrode active material may include various oxides, for example, lithium-containing cobalt oxides (for example, $LiCoO_2$), manganese dioxide, lithium manganese composite oxides (for example, $LiMn_2O_4$, $LiMnO_2$), lithium-containing nickel oxides (for example, $LiNiO_2$), lithium-containing nickel cobalt oxides (for example, $LiNi_{0.8}Co_{0.2}O_2$), lithium-containing iron oxides, lithium-containing vanadium oxides, chalcogen compounds such as titanium disulfide and molybdenum disulfide, and the like. The species of the positive electrode active material to be used may be one species or two species or more.

Examples of the binder include polytetrafluoroethylene (PTFE), polyvinylidene fluoride (PVdF), fluororubber, styrene butadiene rubber (SBR), carboxymethyl cellulose (CMC), polyimide, polyamide, and the like. The species of the binder may be one species, or two species or more.

Examples of the electro-conductive agent include carbon black such as acetylene black and Ketjen black, graphite, carbon fiber, carbon nanotube, fullerene, and the like. The species of the electro-conductive agent may be one species, or two species or more.

Blending proportions of the positive electrode active material, electro-conducting agent, and binder in the positive electrode active material containing layer are preferably 80% by mass to 95% by mass of the positive electrode active material, 3% by mass to 18% by mass of the electro-conductive agent, and 2% by mass to 17% by mass of the binder.

As the current collector, an aluminum foil or aluminum alloy foil is preferable, and the average crystal particle size thereof is preferably 50 $\mu$m or less, more preferably 30 $\mu$m or less, and further preferably 5 $\mu$m or less. The current collector formed of aluminum foil or aluminum alloy foil having such an average crystal particle size can remarkably increase the strength, and allows the density of the positive electrode to be made high by high pressing pressure, to increase the battery capacity.

Aluminum foil or aluminum alloy foil having an average crystal particle size of 50 $\mu$m or less is complicatedly influenced by many factors such as material composition, impurities, processing conditions, heat treatment history and heating condition of annealing, and the above (diameter) is adjusted by combining the above factors in the manufacturing process.

The thickness of the current collector is preferably 20 um or less, and more preferably 15 $\mu$m or less. The purity of the aluminum foil is preferably 99% or higher. The aluminum alloy is preferably an alloy containing an element such as magnesium, zinc, or silicon. Meanwhile, a content of transition metal such as iron, copper, nickel, and chromium is preferably 1% or less.

The positive electrode is fabricated, for example, by suspending the positive electrode active material, electro-conductive agent, and binder in a suitable solvent, applying the resultant slurry onto a current collector, and drying the slurry to prepare a positive electrode active material containing layer, then conducting a press. Otherwise, the positive electrode active material, electro-conductive agent, and binder may be formed into pellets and used as the positive electrode active material containing layer.

The positive electrode active material-containing layer preferably has a porosity of 20% or higher and 50% or lower. The positive electrode provided with the positive electrode active material-containing layer having such porosity is high in density and excellent in affinity with the electrolyte. A more preferable porosity is 250 or higher and 40% or lower.

The density of the positive electrode active material-containing layer is preferably 2.5g/cm$^3$ or higher.

(3) Electrolyte

Examples of the electrolyte include a liquid nonaqueous electrolyte prepared by dissolving an electrolyte salt (solute) in a nonaqueous solvent, a gel nonaqueous electrolyte in which a liquid electrolyte and a polymer material are combined and made into a composite, and the like.

Examples of the electrolyte salt include a lithium salt such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), or lithium bistrifluoromethylsulfonylimide [$LiN(CF_3SO_2)_2$], and the like. The electrolyte salts may be mixed in alone, or two species or more may be mixed.

The electrolyte salt is preferably dissolved at a range of 0.5 mol/L to 2.5 mol/L with respect to the nonaqueous solvent.

Examples of the nonaqueous solvent include organic solvents like cyclic carbonates such as ethylene carbonate (EC), propylene carbonate (PC) and vinylene carbonate (VC); linear carbonates such as dimethyl carbonate (DMC), ethyl methyl carbonate (EMC) and diethyl carbonate (DEC) ; cyclic ethers such as tetrahydrofuran (THF) and 2-methyl tetrahydrofuran (2MeTHF); linear ethers such as dimethoxyethane (DME); cyclic esters such as γ-butyrolactone (BL); linear esters such as methyl acetate, ethyl acetate, methyl propionate, and ethyl propionate; acetonitrile (AN); sulfolane (SL); and the like. These organic solvents may be used alone or as a mixture of two or more.

Examples of the polymer material used for the gel nonaqueous electrolyte include polyvinylidene fluoride (PVdF), polyacrylonitrile (PAN) polyethylene oxide (PEO), and the like.

(4) Separator

Examples of the separator include a porous film, a non-woven fabric made of synthetic resin, and the like, which contain polyethylene (PE), polypropylene (PP), cellulose, or polyvinylidene fluoride (PVdF).

(5) Container Member

The container member may be formed of a laminate film or a metallic container. In the case of using a metallic container, the lid may be made integral with or separate from the container. The thickness of the metallic container is more preferably 0.5 mm or less, or 0.2 mm or less. Examples of the shape of the container member include flat, prismatic, cylindrical, coin, button, sheet, stacked and the like. Other than those for small batteries installed on portable electronic devices and the like, the container member may also be a container member for large batteries installed on two-wheeled or four-wheeled automobiles.

The film thickness of the laminate film-made container member is desirably 0.2 mm or less. Examples of the laminate film include a multilayer film including resin films and a metal layer disposed between the resin films. The metal layer is preferably aluminum foil or aluminum alloy foil for weight reduction. As the resin film, for example, a polymer material such as polypropylene (PP), polyethylene (PE), nylon, or polyethylene terephthalate (PET) may be used. The laminate film can be formed into the shape of the container member through sealing by heat sealing.

The metallic container is made of aluminum, an aluminum alloy or the like. The aluminum alloy is preferably an alloy containing an element such as magnesium, zinc, or silicon. In aluminum or aluminum alloy, the content of transition metal such as iron, copper, nickel, chromium, or the like is preferably 100 ppm or less from the viewpoint of dramatically improving long-term reliability and heat dissipation in a high temperature environment.

The metallic container made of aluminum or an aluminum alloy preferably has an average crystal particle size of 50 μm or less, more preferably 30 μm or less, further preferably 5 μm or less. By setting the average crystal particle size to 50 μm or less, the strength of the metallic container made of aluminum or an aluminum alloy can be dramatically increased, and thereby making possible further reduction of the thickness of the container. As a result, there can be realized a battery that is lightweight, has high output, and is excellent in long-term reliability, and thus suitable for onboard use or the like.

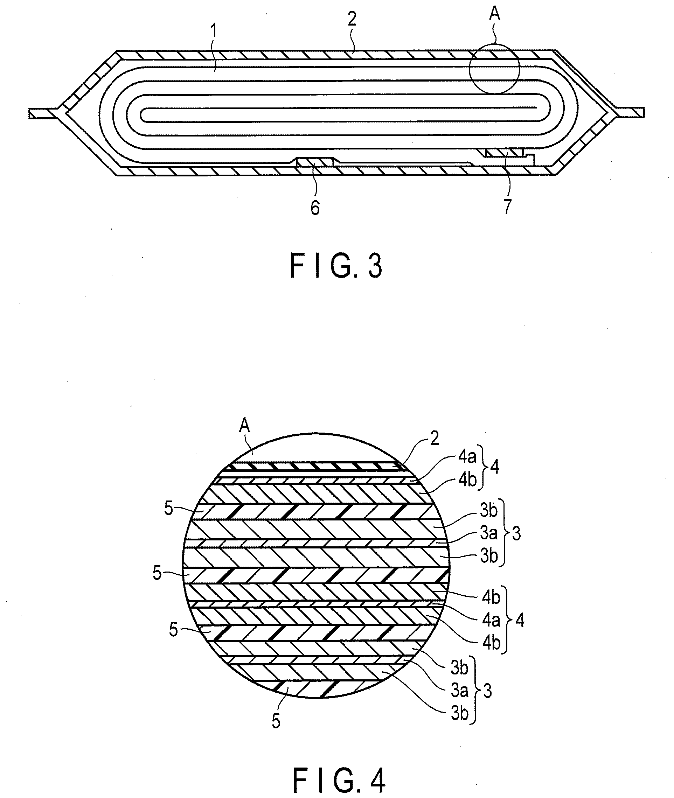

An example of the battery will be described with reference to FIG. 3 and FIG. 4. A flat battery shown in FIG. 3 is provided with a flat shaped wound electrode group 1, a container member 2, a positive electrode terminal 7, a negative electrode terminal 6, and an electrolyte (not shown) . The container member 2 is a bag-form container member made of laminate film. The wound electrode group 1 is housed in the container member 2. As shown in FIG. 4, the wound electrode group 1 includes a positive electrode 3, a negative electrode 4 and a separator 5, and is formed by having a stack, with stacking in the order the negative electrode 4, the separator 5, the positive electrode 3 and the separator 5 from the outside, be spirally wound and subjected to press molding.

The positive electrode 3 includes a positive electrode current collector 3a and a positive electrode active material containing layer 3b. The positive electrode active material containing layer 3b contains a positive electrode active material. The positive electrode active material containing layer 3b is formed on both faces of the positive electrode current collector 3a. The negative electrode 4 includes a negative electrode current collector 4a and a negative electrode active material containing layer 4b. The negative electrode active material containing layer 4b contains a negative electrode active material. Among the negative electrode 4, at the portion positioned outermost, the negative electrode active material containing layer 4b is formed only on one face on the inner surface side of the negative electrode current collector 4a. At the other portions of the negative electrode 4, the negative electrode active material containing layer 4b is formed on both faces of the negative electrode current collector 4a.

As shown in FIG. 3, the positive electrode terminal 7 is connected to the positive electrode 3 in the vicinity of the outer peripheral end of the wound electrode group 1. The negative electrode terminal 6 is connected to the outermost portion of the negative electrode 4. The positive electrode terminal 7 and the negative electrode terminal 6 are extended to the outside through an opening of the container member 2.

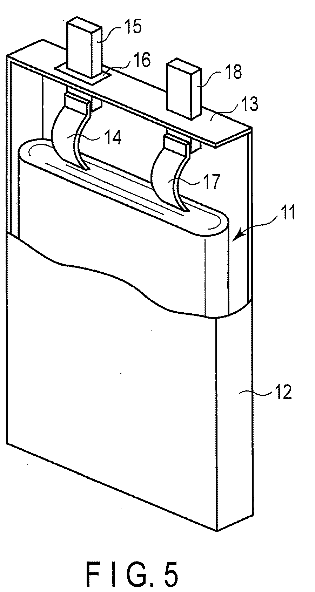

The battery is not limited to one having the configuration shown in FIG. 3 and FIG. 4 described above, but may be of a configuration shown in FIG. 5, for example.

In a prismatic battery shown in FIG. 5, a wound electrode group 11 is housed in a metallic bottomed rectangular tubular container 12 as the container member. A rectangular lid 13 is welded to the opening of the container 12. The flat wound electrode group 11 may have, for example, a configuration similar to the wound electrode group 1 described with reference to FIG. 3 and FIG. 4.

One end of a negative electrode tab 14 is electrically connected to the negative electrode current collector and the other end thereof is electrically connected to a negative electrode terminal 15. The negative electrode terminal 15 is fixed to the rectangular lid 13 by a hermetic seal with a glass material 16 interposed. One end of a positive electrode tab 17 is electrically connected to the positive electrode current collector and the other end is electrically connected to a positive electrode terminal 18 fixed to the rectangular lid 13.

The negative electrode tab 14 is made of a material such as aluminum or an aluminum alloy containing elements such as Mg, Ti, Zn, Mn, Fe, Cu, Si, and the like. The negative electrode tab 14 is preferably formed of the same material as that of the negative electrode current collector, so as to reduce the contact resistance with the negative electrode current collector.

The positive electrode tab 17 is made of a material such as aluminum or an aluminum alloy containing elements such as Mg, Ti, Zn, Mn, Fe, Cu, Si, and the like. The positive electrode tab 17 is preferably formed of the same material as that of the positive electrode current collector, so as to reduce the contact resistance with the positive electrode current collector.

In the illustrated battery, the wound electrode group in which the separator is wound together with the positive electrode and the negative electrode has been used, but there may be used a stacked electrode group in which a separator is folded in zigzag and positive electrode(s) and negative electrode (s) are alternately arranged at the folded portions.

The battery according to the second embodiment includes the electrode according to the first embodiment. Thus, the battery can exhibit excellent cycle life performance even in use at large current or under low temperature conditions. Moreover, gas generation in the battery is little, and the battery has high energy density.

(Third Embodiment)

According to a third embodiment, a battery pack is provided. The battery pack includes the battery according to the second embodiment.

The battery pack according to the third embodiment may include one or plural of the battery (single-battery) according to the second embodiment described above. The plural batteries that may be included in the battery pack may be electrically connected in series or in parallel to configure a battery module . The battery pack may include plural battery modules.

Next, an example of a battery pack according to the third embodiment will be described with reference to the drawings.

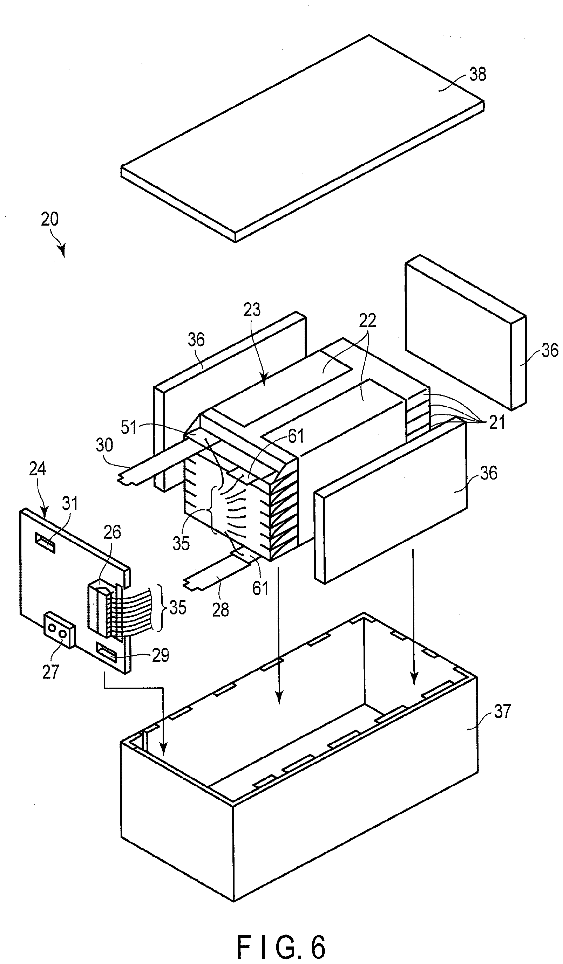

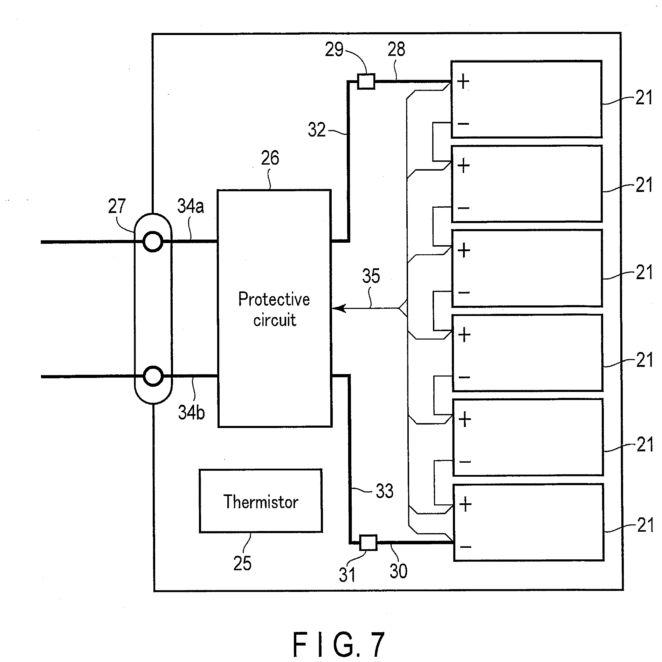

FIG. 6 is an exploded perspective view of an example of the battery pack according to the second embodiment. FIG. 7 is a block diagram showing an electric circuit of the battery pack shown in FIG. 6.

The battery pack 20 shown in FIG. 6 and FIG. 7 includes plural single-batteries 21. The single-battery 21 may be the exemplar flat battery according to the second embodiment described with reference to FIG. 5.

The plural single-batteries 21 are stacked so that negative electrode terminals 51 and positive electrode terminals 61 extending to the outside are aligned in the same direction and are fastened with an adhesive tape 22 to configure a battery module 23. These single-batteries 21 are electrically connected in series with each other as shown in FIG. 7.

A printed wiring board 24 is disposed facing the side surface from which the negative electrode terminals 51 and the positive electrode terminals 61 of the single-batteries 21 extend. As shown in FIG. 7, the printed wiring board 24 is mounted with a thermistor 25, a protective circuit 26, and an energizing terminal 27 to external equipment. Note that an insulating plate (not shown) is attached to the surface of the printed wiring board 24 which faces the battery module 23 so as to avoid unnecessary connection with the wiring of the battery module 23.

A positive electrode side lead 28 is connected to the positive electrode terminal 61 located lowermost in the battery module 23, and its tip is inserted into a positive electrode side connector 29 of the printed wiring board 24 and electrically connected thereto. A negative electrode side lead 30 is connected to the negative electrode terminal 51 located uppermost in the battery module 23, and its tip is inserted into the negative electrode side connector 31 of the printed wiring board 24 and electrically connected thereto. These connectors 29 and 31 are connected to the protective circuit 26 through wiring 32 and the wiring 33 formed on the printed wiring board 24.

The thermistor 25 detects the temperature of the single-batteries 21, and the detection signal is transmitted to the protective circuit 26. The protective circuit 26 can shut off a plus-side wiring 34a and a minus-side wiring 34b between the protective circuit 26 and the energizing terminal 27 to external equipment in accordance to a predetermined condition. An example of the predetermined condition is, for example, when the temperature detected by the thermistor 25 becomes a predetermined temperature or higher. Another example of the predetermined condition is, for example, when overcharge, over-discharge, overcurrent, or the like of the single-battery 21 is detected. Detection of the overcharge or the like is performed for each of the individual single-batteries 21 or the entire battery module 23. In the case of detecting each single-battery 21, a battery voltage may be detected, or a positive electrode potential or a negative electrode potential may be detected. In the latter case, a lithium electrode used as a reference electrode is inserted into each single-battery 21. In the case of the battery pack 20 of FIG. 6 and FIG. 7, wiring 35 for voltage detection is connected to each of the single-batteries 21. Detection signals are transmitted to the protective circuit 26 through the wiring 35.

Protective sheets 36 made of rubber or resin are respectively arranged on three side surfaces of the battery module 23 excluding the side surface from which the positive electrode terminal 61 and the negative electrode terminal 51 protrude.

The battery module 23 is housed in a housing container 37 together with each protective sheet 36 and the printed wiring board 24. That is, the protective sheets 36 are disposed in the housing container 37 respectively on both inner side surfaces in a long-side direction and the inner side surface in a short-side direction, and the printed wiring board 24 is disposed on the inner side surface at the opposite side in the short-side direction. The battery module 23 is located in a space surrounded by the protective sheets 36 and the printed wiring board 24. A lid 38 is attached to the upper surface of the housing container 37.

For fixing the battery module 23, a thermal shrinkage tape may be used in place of an adhesive tape 22. In this case, after the protective sheets are disposed on each side surface of the battery module and a thermal shrinkage tape is wound, the thermal shrinkage tape is thermally shrunk, to bind the battery module.

In FIG. 6 and FIG. 7, the single-batteries 21 are connected in series, but the single-batteries 21 may be connected in parallel in order to increase the battery capacity. Further, assembled battery packs may also be connected in series and/or parallel.

The mode of the battery pack is appropriately changed depending on the application. A preferable application of the battery pack is one where good cycle performance is desired when a large current is extracted. Specific examples of the applications include that for a power source of a digital camera, and for use in a vehicle such as a two-wheeled or four-wheeled hybrid electric automobile, a two-wheeled or four-wheeled electric automobile, and a power-assisted bicycle. The battery pack is particularly favorably used for onboard use.

The battery pack according to the third embodiment includes the battery according to the second embodiment. Thus, the battery pack can exhibit excellent cycle life performance even in use at large current or under low temperature conditions . Moreover, gas generation in the battery pack is little, and the battery pack has high energy density.

[Examples]

Hereinafter, the above embodiments will be described in more detail based on examples. Examples will be described, but so long as the scope of the present invention is not exceeded, the present invention is not limited to the Examples given below.

(Example 1)

In Example 1, a nonaqueous electrolyte secondary battery of Example 1 was produced by the following procedure.

[Fabrication of Negative Electrode]

Powder of a lithium-titanium composite oxide having a $Li_4Ti_5O_{12}$ composition and a spinel structure was prepared by the following procedure.

First, anatase titanium oxide was put into a solution in which lithium hydroxide was dissolved in pure water, and the mixture was stirred and dried. These materials were mixed so that the molar ratio of Li:Ti in the mixture was 4:5. Prior to mixing, the materials were sufficiently pulverized.

The mixed materials were subjected to a heat treatment at 870°C for two hours in an air atmosphere. Subsequently, the fired product was pulverized with a ball mill using zirconia balls as media, and then washed with water. The fired product was subjected to a heat treatment at 600°C for 30 minutes in an air atmosphere, and then classified. Thus, powder of the product was obtained.

The average primary particle size of the powder of the obtained product was analyzed by SEM. As a result, the powder of the obtained product was found to be particles in a state of primary particles having an average primary particle size of 400 nm.

A part of the primary particles was granulated using a spray dryer. Thus, powder in the form of secondary particles in which primary particles were agglomerated was obtained.

Further, the composition and crystal structure of the obtained product were analyzed using ICP and X-ray diffraction measurement. As a result, the obtained product was found to be a lithium-titanium composite oxide having a spinel crystal structure and a composition of $Li_4Ti_5O_{12}$. Since the half value width of the peak attributed to the (111) plane was 0.15 or less in the X-ray diffraction spectrum, it was found that a product having high crystallinity was obtained. The powder of this product was used as negative electrode active material.

Next, acetylene black as an electro-conductive agent was added to the powder of the spinel lithium titanium composite oxide as negative electrode active material, and mixed with a Henschel mixer to obtain a mixture. At this time, the weight ratio of the primary particles to the secondary particles of the spinel lithium titanium composite oxide was adjusted to 2:3 (primary particles: secondary particles = 2:3). Next, polyvinylidene fluoride (PVdF) as a binder and N-methylpyrrolidone (NMP) as a dispersion medium were added to the mixture, and the mixture was kneaded by a jet paster. Thus, a slurry (slurry for negative electrode fabrication) was obtained.

In the above mixing, the addition amounts of acetylene black and PVdF were adjusted so that the ratio of the negative electrode active material: acetylene black: PVdF in the obtained slurry was 85 parts by mass: 10 parts by mass: 5 parts by mass.

This slurry was applied onto both surfaces of a current collector made of aluminum foil having a thickness of 15 $\mu$m, and the coating film was dried at 125 °C. Further, the dried coating film was subjected to a roll press treatment. Thus, a negative electrode including the current collector and negative electrode active material-containing layer formed on both surfaces of the current collector and having an electrode density (not including the current collector) of 2.1 g/cm$^3$ was fabricated. The thickness of the negative electrode active material-containing layer formed on each surface of the current collector was 60 $\mu$m.

[Fabrication of Positive Electrode]

First, powder of a lithium-nickel-cobalt-manganese composite oxide ($LiNi_{1/3}Co_{1/3}Mn_{1/3}O_2$) was prepared as a positive electrode active material. 5 parts by mass of acetylene black as the electro-conductive agent was added to 90 parts by mass of the positive electrode active material, followed by mixing with a Henschel mixer to obtain a mixed positive electrode active material. Then, 5 parts by mass of PVdF and N-methylpyrrolidone (NMP) at a set ratio were added to the mixed positive electrode active material, and kneaded with a planetary mixer to form a slurry. The slurry was applied onto both surfaces of a current collector made of aluminum foil having a thickness of 15 $\mu$m, and the coating film was dried. Further, the dried coating film was subjected to a roll press treatment. Thus, a positive electrode including the current collector and positive electrode active material-containing layer formed on both surfaces of the current collector and having an electrode density (not including the current collector) of 3.0 g/cm$^3$ was fabricated.

[Fabrication of Electrode Group]

Two separators made of a polyethylene porous film having a thickness of 20 $\mu$m were prepared.

Next, the previously fabricated positive electrode, one separator, the previously fabricated negative electrode, and the other separator were stacked in this order to obtain a stack. This stack was spirally wound. The resultant structure was heat pressed at 90°C to produce a flat electrode group having a width of 30 mm and a thickness of 3.0 mm.

The resultant electrode group was housed in a pack made of a laminated film, and the resultant structure was dried in vacuum at 85°C for 24 hours. The laminated film had a configuration where a polypropylene layer was formed on each of both faces of an aluminum foil having a thickness of 40 $\mu$m. The laminated film had a total thickness of 0.1 mm.

[Preparation of Liquid Nonaqueous Electrolyte]

Propylene carbonate (PC) and dimethyl carbonate (MEC) were mixed at a volume ratio of 1:1 to prepare a mixed solvent. $LiPF_6$ serving as the electrolyte was dissolved at 1 M in this solvent mixture, thereby preparing a liquid nonaqueous electrolyte.

[Production of Nonaqueous Electrolyte Secondary Battery]

The liquid nonaqueous electrolyte was poured into the laminated film pack in which the electrode group was housed as described above. After that, the pack was completely sealed by heat sealing. Thereby, a nonaqueous electrolyte secondary battery having the structure shown in FIGS. 3 and 4, with a width of 35 mm, a thickness of 3.2 mm, a height of 65 mm, and a rated capacity of 1 Ah, was produced.

Next, the fabricated nonaqueous electrolyte secondary battery was charged at a charging rate of 1 A (1C) in an environment of 25°C to adjust an SOC to 50%, and subjected to a heat treatment at 70°C for 48 hours. Then, the battery that had been left to cool to room temperature was discharged at 1 A to 1.5 V under an environment of 25°C, and then charged at 1 A to adjust the SOC to 50%.

(Example 2)

A nonaqueous electrolyte secondary battery was produced in the same manner as in Example 1, except that when powder of spinel lithium titanium composite oxide as negative electrode active material was prepared, the firing conditions were adjusted so that the primary particle size was 200 nm, and the ratio of the primary particles to the secondary particles in the slurry for negative electrode fabrication was adjusted to 1:2 (primary particles: secondary particles = 1:2). The roll press treatment was carried out at the same linear pressure as in Example 1.

(Example 3)

A nonaqueous electrolyte secondary battery was produced in the same manner as in Example 1, except that when powder of spinel lithium titanium composite oxide as negative electrode active material was prepared, the firing conditions were adjusted so that the primary particle size was 600 nm, and the ratio of the primary particles to the secondary particles in the slurry for negative electrode fabrication was adjusted to = 3:2. The roll press treatment was carried out at the same linear pressure as in Example 1.

(Example 4)

A nonaqueous electrolyte secondary battery was produced in the same manner as in Example 1, except that the ratio of the primary particles to the secondary particles in the slurry for negative electrode fabrication was adjusted to 1: 2 . The roll press treatment was carried out at the same linear pressure as in Example 1.

(Comparative Example 1)

A nonaqueous electrolyte secondary battery was produced in the same manner as in Example 1, except that the ratio of the primary particles to the secondary particles in the slurry for negative electrode fabrication was adjusted to 1:4 . The roll press treatment was carried out at the same linear pressure as in Example 1.

(Comparative Example 2)

A nonaqueous electrolyte secondary battery was produced in the same manner as in Example 1, except that the ratio of the primary particles to the secondary particles in the slurry for negative electrode fabrication was adjusted to 3:2. The roll press treatment was carried out at the same linear pressure as in Example 1.

(Comparative Example 3)

A nonaqueous electrolyte secondary battery was produced in the same manner as in Example 1, except that when powder of spinel lithium titanium composite oxide as negative electrode active material was prepared, the firing conditions were adjusted so that the primary particle size was 100 nm, and the ratio of the primary particles to the secondary particles in the slurry for negative electrode fabrication was adjusted to = 1:20. The roll press treatment was carried out at the same linear pressure as in Example 1.

(Comparative Example 4)

A nonaqueous electrolyte secondary battery was produced in the same manner as in Example 1, except that when powder of spinel lithium titanium composite oxide as negative electrode active material was prepared, the firing conditions were adjusted so that the primary particle size was 100 nm, and the ratio of the primary particles to the secondary particles in the slurry for negative electrode fabrication was adjusted to = 1:4. The roll press treatment was carried out at the same linear pressure as in Example 1.

(Comparative Example 5)

A nonaqueous electrolyte secondary battery was produced in the same manner as in Example 1, except that when powder of spinel lithium-titanium composite oxide as negative electrode active material was prepared, the firing conditions were adjusted so that the primary particle size was 100 nm, and the ratio of the primary particles to the secondary particles in the slurry for negative electrode fabrication was adjusted to = 1:2. The roll press treatment was carried out at the same linear pressure as in Example 1.

(Comparative Example 6)

A nonaqueous electrolyte secondary battery was produced in the same manner as in Example 1, except that when powder of spinel lithium titanium composite oxide as negative electrode active material was prepared, the firing conditions were adjusted so that the primary particle size was 700 nm, and the ratio of the primary particles to the secondary particles in the slurry for negative electrode fabrication was adjusted to = 1:20. The roll press treatment was carried out at the same linear pressure as in Example 1.

(Comparative Example 7)

A nonaqueous electrolyte secondary battery was produced in the same manner as in Example 1, except that when powder of spinel lithium titanium composite oxide as negative electrode active material was prepared, the firing conditions were adjusted so that the primary particle size was 700 nm, and the ratio of the primary particles to the secondary particles in the slurry for negative electrode fabrication was adjusted to = 4:1. The roll press treatment was carried out at the same linear pressure as in Example 1.

(Comparative Example 8)

A nonaqueous electrolyte secondary battery was produced in the same manner as in Example 1, except that when powder of spinel lithium titanium composite oxide as negative electrode active material was prepared, the firing conditions were adjusted so that the primary particle size was 700 nm, and the ratio of the primary particles to the secondary particles in the slurry for negative electrode fabrication was adjusted to = 9:1. The roll press treatment was carried out at the same linear pressure as in Example 1.

<Measurement>

With respect to each of the nonaqueous electrolyte secondary batteries produced in Examples 1-4 and Comparative Examples 1-8, the pore specific surface area $S_A$ (BET specific surface area) of the negative electrode was measured by the nitrogen adsorption method described above. Further, with respect to each battery, the pore specific surface area $S_B$ of the negative electrode was measured by the mercury porosimetry described above. The ratio $S_A/S_B$ of the former to the latter was calculated. The calculation results are shown in Table 1 below.
The particle size distribution of the negative electrode included in each battery was measured by the laser diffraction-scattering method described above. The ratio $D_{90}/D_{50}$ of $D_{90}$ to $D_{50}$ in the obtained particle size distribution was calculated. The calculation results are shown in Table 1 below.

<Evaluation>

Each of the nonaqueous electrolyte secondary batteries produced in Examples 1-4 and Comparative Examples 1-8 was subjected to performance evaluation as described below. Specifically, each battery was subjected to evaluation of input performance in a low-temperature environment, measurement of energy density, a cycle life test, and measurement of the amount of gas generated during the cycle life test.

(Low-Temperature Input Performance)

The input performance of the battery under low-temperature conditions was evaluated as follows.
First, the battery was charged at a constant current at a charging rate of 1 A (1C) in a thermostatic bath at 25°C until the voltage of the battery reached 2.7 V. Subsequently, the battery was charged at a constant voltage until the current value reached 50 mA, followed by a rest time of ten minutes. Next, the battery was discharged at a constant current of 200 mA to 1.5 V, and then a rest time of ten minutes was provided. This charge-discharge cycle was repeated three times, and then a charge capacity obtained when the battery was charged at a constant current of 1 A to 2.7 V was measured and defined as a reference charge capacity.
Then, after discharging at a constant current of 200 mA to 1.5 V, a rest time of ten minutes was provided. The previous charge-discharge cycle was performed once again. The temperature of the thermostatic bath was set to -20°C, and the battery was left to stand in the thermostatic bath for three hours. The battery was charged at a constant current of 1 A to 2.7 V in the thermostatic bath at a low temperature (-20°C), and the charge capacity obtained thereupon was measured. A value calculated by dividing the obtained charge capacity under the low-temperature conditions by the reference charge capacity was defined as a low-temperature input performance.

(Energy Density)

The energy density of the battery was measured as follows .

First, the battery was charged at a constant current at a charging rate of 1 A (1C) in a thermostatic bath at 25°C until the voltage of the battery reached 2.7 V. Subsequently, the battery was charged at a constant voltage until the current value reached 50 mA, followed by a rest time of ten minutes. Next, the battery was discharged at a constant current of 200 mA to 1.5 V, and then a rest time of ten minutes was provided. This charge-discharge cycle was repeated three times, and the discharge capacity obtained at the time of discharge in the third cycle was measured and defined as a reference discharge capacity.

The battery energy was calculated by multiplying the reference discharge capacity by an average operating voltage during discharge. The (volumetric) energy density of the battery was then calculated by dividing the battery energy by the volume of the battery.

(Cycle Life Performance)

The cycle life test described below was performed to evaluate the cycle life performance of the battery.

The battery was charged at a constant current at a charging rate of 1 A (1C) in a thermostatic bath at 25°C until the voltage of the battery reached 2.7 V. Subsequently, the battery was charged at a constant voltage until the current value reached 50 mA, followed by a rest time of ten minutes. Next, the battery was discharged at a constant current of 200 mA to 1.5 V, and then a rest time of ten minutes was provided. This charge-discharge cycle was repeated three times, and the discharge capacity obtained at the time of discharge in the third cycle was measured and defined as a reference discharge capacity.

The battery was charged at a constant current at a charging rate of 8 A in a thermostatic bath at 45°C until the voltage of the battery reached 2.7 V. Subsequently, the battery was charged at a constant voltage until the current value reached 50 mA, followed by a rest time of five minutes. Next, the battery was discharged at a constant current of 5 A to 1.5 V, and then a rest time of five minutes was provided. This charge-discharge cycle was repeated 1000 times.

After the charge-discharge cycle was repeated 1000 times, the battery was charged at a constant current at a charging rate of 1 A in the thermostatic bath at 25°C until the voltage reached 2.7 V. Subsequently, the battery was charged at a constant voltage until the current value reached 50 mA, followed by a rest time of ten minutes. Then, the discharge capacity obtained at the time of discharge at a constant current of 200 mA to 1.5 V was measured, and defined as a recovered capacity. The capacity retention ratio was calculated by dividing the recovered capacity by the reference discharge capacity. The ratio (capacity retention rate) of the discharge capacity (recovered capacity) retained after the test to the discharge capacity (reference discharge capacity) before the cycle life test obtained in this manner was used as an index for evaluating the cycle life performance.

(Amount of Generated Gas)

As described below, the amount of gas generated during the cycle life test was measured.

The battery prior to subjecting to the cycle life test was immersed in water in a rectangular parallelepiped container with a scale, and the volume of the battery was read from a change in the position of the water surface. The volume of the battery that had been subjected to the cycle life test was also read in the same manner, and the amount of change from the battery volume before the test was calculated and determined as the amount of generated gas.

Table 1 below summarizes the design of the negative electrode and results of performance evaluation for each of the nonaqueous electrolyte secondary batteries produced in Examples 1-4 and Comparative Examples 1-8. As the design of the negative electrode, the average primary particle size of the spinel lithium titanium composite oxide contained as the negative electrode active material, the ratio $S_A/S_B$ between the pore specific surface areas $S_A$ and $S_B$ of the negative electrode respectively measured by the nitrogen adsorption method and mercury porosimetry, and the ratio $D_{90}/D_{50}$ of $D_{90}$ to $D_{50}$ in the particle size distribution measured by the laser diffraction-scattering method are shown. As results of the performance evaluation, the evaluation results of the low-temperature input performance, the energy density, the cycle life performance, and the amount of generated gas described above are shown as relative numerical values with respect to the performance value and the measurement value of Example 1 taken as being a reference value of 100.

[Table 1]

| [Table 1] | Average primary particle size (nm) | $S_A/S_B$ | $D_{90}/D_{50}$ | Low-temperature input performance | Energy density | Cycle life performance | Amount of generated gas |
|---|---|---|---|---|---|---|---|
| Example 1 | 400 | 0.5 | 7.8 | 100 (Reference) | 100 (Reference) | 100 (Reference) | 100 (Reference) |
| Example 2 | 200 | 0.5 | 8.4 | 104 | 96 | 94 | 106 |
| Example 3 | 600 | 0.5 | 7.1 | 95 | 105 | 102 | 85 |
| Example 4 | 400 | 0.3 | 8.9 | 105 | 94 | 104 | 84 |
| Example 1 | 400 | 0.2 | 10.0 | 106 | 84 | 105 | 80 |
| Example 2 | 400 | 0.6 | 9.7 | 92 | 102 | 92 | 123 |
| Example 3 | 100 | 0.2 | 13.6 | 110 | 76 | 89 | 121 |
| Example 4 | 100 | 0.5 | 10.8 | 106 | 85 | 83 | 136 |
| Example 5 | 100 | 0.6 | 11.6 | 99 | 88 | 80 | 151 |
| Example 6 | 700 | 0.2 | 9.7 | 93 | 92 | 108 | 77 |
| Example 7 | 700 | 0.5 | 6.4 | 83 | 107 | 103 | 82 |
| Example 8 | 700 | 0.6 | 6.4 | 75 | 109 | 94 | 96 |

As shown in Table 1, with the batteries of Examples 1-4, which include a titanium-containing oxide (lithium titanate having a spinel structure) having an average primary particle size of 200 nm or more and 600 nm or less as a negative electrode active material, and in which the ratio $S_A/S_B$ of the specific surface area $S_A$ of the negative electrode measured by the nitrogen adsorption method to the pore specific surface area $S_B$ of the negative electrode measured by the mercury porosimetry is 0.3 or higher and lower than 0.6, satisfactory low-temperature input performance was exhibited, satisfactory energy density and satisfactory cycle life performance were obtained, and the amount of generated gas was suppressed.

In contrast, in Comparative Example 1, the energy density of the battery was low. In Comparative Example 1, since the ratio $S_A/S_B$ was low, it is recognized that the proportion of large pores to small pores in the negative electrode was high. It is presumed that the energy density of the battery was low due to the large number of large pores in the negative electrode.

In Comparative Example 2, the low-temperature input performance was low, and the amount of generated gas was large. In Comparative Example 2, since the ratio $S_A/S_B$ was high, it is recognized that many small pores were present in the negative electrode. It is presumed that due to the large number of small pores in the negative electrode, the input performance had decreased, whereby the amount of generated gas increased.

In Comparative Examples 3-5, the energy density and the cycle life performance were low, and on top of that, the amount of generated gas was large. In Comparative Examples 3-5, since the primary particle diameter of the negative electrode active material was small, the crystallinity was low, and it is presumed that the energy density and the cycle life performance were low due to the low crystallinity. It is also presumed that the cycle life performance was low because the pores in the negative electrode are generally small in size due to the small primary particle size. Further, it is presumed that since the specific surface area of the active material particles was large due to the small primary particle size, the low-temperature input performance was satisfactory, whereas side reactions between the active material and the electrolyte was increased, whereby the amount of generated gas had increased.

In Comparative Examples 6-8, the low-temperature input performance was low. It is presumed regarding Comparative Examples 6-8 that, since the primary particle size of the negative electrode active material was large and the specific surface area of the active material particles was small, the lithium ion acceptance was low.

According to at least one embodiment and example described above, provided is an electrode including an active material that includes a titanium-containing oxide. The active material has an average primary particle size of 200 nm to 600 nm. Considering the electrode, a specific surface area $S_A$ obtained by a nitrogen adsorption method and a pore specific surface area $S_B$ obtained by mercury porosimetry satisfy a relationship of $0.3 \leq S_A/S_B < 0.6$. The electrode can realize a battery and battery pack with excellent large current performance at a low temperature and life performance, little gas generation, and high energy density.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An electrode comprising an active material, the active material including a titanium-containing oxide and having an average primary particle size of 200 nm or more and 600nm or less, and a specific surface area $S_A$ according to a nitrogen adsorption method and a pore specific surface area $S_B$ according to mercury porosimetry of the electrode satisfying a relationship of $0.3 \leq S_A/S_B < 0.6$.

2. The electrode according to claim 1, wherein, in a particle size distribution of the electrode, a ratio $D_{90}/D_{50}$ of a particle size $D_{90}$ at which a cumulative frequency from a small particle size side is 90% to a particle size $D_{50}$ at which a cumulative frequency from the small particle size side is 50% is 5 or more and 10 or less.

3. The electrode according to claim 1 or 2, wherein a half value width of a (111) peak in an X-ray diffraction spectrum of the titanium-containing oxide is 0.15 or less.

4. The electrode according to any one of claims 1 to 3, comprising an active material-containing layer, the active material-containing layer containing the active material and having a thickness of 20 $\mu$m or more and 80 $\mu$m or less.

5. The electrode according to any one of claims 1 to 4, wherein the titanium-containing oxide comprises lithium titanate having a spinel structure.

6. A battery comprising:

   a positive electrode;
   a negative electrode; and
   an electrolyte,
   at least one of the positive electrode or the negative electrode comprising the electrode according to any one of claims 1 to 3.

7. A battery pack comprising the battery according to claim 6.

F I G. 1

F I G. 2

FIG.3

FIG.4

F I G. 5

F I G. 6

F I G. 7

| | | International application No. |
|---|---|---|
| **INTERNATIONAL SEARCH REPORT** | | PCT/JP2020/048780 |

A. CLASSIFICATION OF SUBJECT MATTER
H01M 4/131(2010.01)i; H01M 4/485(2010.01)i
FI: H01M4/485; H01M4/131

According to International Patent Classification (IPC) or to both national classification and IPC

B. FIELDS SEARCHED

Minimum documentation searched (classification system followed by classification symbols)
H01M4/131; H01M4/485

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-006777 A (UBE INDUSTRIES, LTD.) 14 January 2016 (2016-01-14) paragraphs [0013], [0015], [0025], [0112], [0115]-[0126], fig. 1 | 1-7 |
| A | JP 2007-018882 A (TOSHIBA CORP.) 25 January 2007 (2007-01-25) paragraphs [0011], [0022]-[0025] | 1-7 |
| A | JP 2013-206869 A (TAIYO YUDEN CO., LTD.) 07 October 2013 (2013-10-07) paragraphs [0003], [0011] | 1-7 |
| A | JP 2014-024723 A (TOHO TITANIUM CO., LTD.) 06 February 2014 (2014-02-06) paragraphs [0002], [0018], [0024] | 1-7 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 February 2021 (22.02.2021) | 09 March 2021 (09.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| Patent Documents referred in the Report | Publication Date | Patent Family | Publication Date |
|---|---|---|---|
| JP 2016-006777 A | 14 Jan. 2016 | US 2016/0204433 A1 paragraphs [0008], [0010], [0027], [0137], [0175]-[0198], [0207]-[0225], fig. 1<br>US 2017/0107117 A1<br>WO 2015/030192 A1<br>WO 2015/178457 A1<br>EP 3147973 A1<br>KR 10-2016-0048184 A<br>KR 10-2017-0009914 A<br>CN 106415899 A<br>JP 2016-001591 A<br>JP 2016-000681 A | |
| JP 2007-018882 A | 25 Jan. 2007 | US 2007/0009801 A1 paragraphs [0057]-[0058], [0067]-[0071]<br>US 2010/0119936 A1<br>US 2011/0020699 A1<br>US 2011/0229758 A1<br>US 2012/0141871 A1<br>US 2013/0040187 A1<br>US 2013/0273417 A1<br>US 2014/0220437 A1<br>KR 10-2007-0006592 A<br>CN 1893167 A | |
| JP 2013-206869 A | 07 Oct. 2013 | US 2013/0260251 A1 paragraphs [0005], [0017]<br>CN 103367734 A | |
| JP 2014-024723 A | 06 Feb. 2014 | (Family: none) | |

Form PCT/ISA/210 (patent family annex) (January 2015)

27

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009158396 A
- JP 2013105704 A
- JP 2007018882 A
- WO 2018110708 A
- JP 2018156865 A
- JP 2014143004 A
- JP H9161801 B

**Non-patent literature cited in the description**

- **GENJI JIMBO et al.** Handbook of Fine Particles. Asakura Shoten, 1991, 151-152
- Powder Property Measuring Method. Asakura Shoten, 1973, 257-259